# FASCICULE DE BREVET EUROPEEN

(11) **EP 2 307 711 B1**
(45) Date de publication et mention de la délivrance du brevet: **10.07.2013**
(21) Numéro de dépôt: 09772640.0
(22) Date de dépôt: 02.06.2009
(51) Int. Cl.: F03B 17/06

(54) **DISPOSITIF D'ADMISSION POUR MACHINE À TURBINE HYDRAULIQUE RESPECTUEUSE DE L'ENVIRONNEMENT**
EINLASSVORRICHTUNG FÜR EINE UMWELTFREUNDLICHE HYDRAULISCHE TURBOMASCHINE
INLET DEVICE FOR ENVIRONMENTALLY-FRIENDLY HYDRAULIC TURBINE MACHINE

(30) Priorité: 04.06.2008 FR 0803083
(43) Date de publication de la demande: 13.04.2011
(73) Titulaire: Isi, 63800 Cournon d'Auvergne (FR)
(72) Inventeur: DURIN, Roland, F-03200 Vichy (FR); CHAZELLET, Noël, F-63960 Veyre-Monton (FR)
(74) Mandataire: Monod, Jean-Yves
(86) Numéro de dépôt international: PCT/FR2009/000638
(87) Numéro de publication internationale: WO 2010/000957

(56) Documents cités:
- WO-A-2004/048773
- FR-A- 2 847 621
- US-A- 4 973 856
- US-A- 5 430 332
- US-B1- 6 208 037

## Description

### DOMAINE DE L'INVENTION

La présente invention concerne les machines à turbine hydraulique pour des cours d'eau de basse chute. Elle vise particulièrement l'équipement de sites nouvellement créés, ou le rééquipement de sites anciens exploités antérieurement avec des roues à aubes traditionnelles, comme source d'énergie électrique renouvelable sur des cours d'eau de petite ou moyenne taille.

### ETAT DE LA TECHNIQUE

Un des enjeux de ce type d'installation est de créer des équipements relativement faciles à mettre en exploitation sur les plans technique et juridique tout en préservant au maximum le milieu naturel et notamment la faune piscicole. On vu récemment se développer des installations qui mettent en oeuvre une turbine ou roue à aubes d'axe horizontal possédant une vitesse de rotation réduite, typiquement ne dépassant pas environ vingt tours par minute, et dont les aubes ou pales sont aménagées pour permettre aux différentes espèces aquatiques, telles que poissons ou anguilles, emportées par le courant, de traverser la machine sans dommage.

Une telle machine est par exemple décrite dans le document de demande de brevet WO 2004/048773. Le courant aquatique est canalisé en tout ou partie dans un couloir à parois verticales entre lesquelles est installée la roue. Le canal est limité par une paroi de fonds incurvée selon un arc cylindrique entre une entrée du côté amont du canal et une sortie en aval au voisinage de l'aplomb de l'axe de la roue. En tournant, les extrémités radiales externes des aubes défilent au ras de ladite paroi cylindrique entre l'entrée et la sortie du canal. Le niveau de la paroi de fond à l'entrée du canal est plus élevé que celui de sa sortie en sorte que l'eau du courant forme une retenue en amont de la roue avant d'être admise dans le canal pour y être turbinée par la roue. Un dispositif de captation du mouvement de la roue avec une multiplication appropriée de sa vitesse de rotation permet d'entraîner une génératrice de courant électrique.

Bien entendu, le niveau de l'eau retenue varie avec le débit du cours d'eau, en fonction des conditions climatiques et saisonnières ou autres. La puissance électrique récupérable varie donc avec ce débit. Dans le mode de réalisation précédemment évoqué, le courant d'eau admis dans la machine est régulé à l'amont par une sorte de cloison coulissante de bas en haut, verticale ou fortement inclinée pour former un point d'entrée de l'eau un peu en amont de la trajectoire des aubes dans la turbine. De la sorte, lorsque la cloison est rétractée vers le bas son extrémité supérieure est basse et peut laisser passer un débit d'eau important vers la roue. Quand elle est en extension vers le haut, cette extrémité forme un seuil à la manière d'un déversoir à partir duquel un débit d'eau relativement réduit peut former une chute en pénétrant dans la turbine. Cependant les essais du demandeur ont montré que ce type de régulation ne fonctionne pas de façon satisfaisante. En effet le système ne permet pas d'obtenir un rendement convenable de la turbine pour chaque débit d'eau disponible dans le cours d'eau.

Un autre type de réalisation est décrit dans le brevet US 543033 considéré comme le document décrivant l'état de la technique antérieure. Une turbine à axe horizontal est installée entre un réservoir alimenté par un cours d'eau est un canal d'évacuation de l'eau turbinée en aval. En amont, l'eau du réservoir est retenue par une cloison inclinée en montant de l'amont vers l'aval. A son extrémité supérieure qui forme déversoir, cette cloison est rattachée à une paroi déformable qui se développe autour de la partie inférieure de la turbine. L'eau qui franchit le déversoir est recueillie par cette paroi et admise entre les aubes de la turbine pour en ressortir en direction du canal d'évacuation vers l'aval. La partie supérieure de la cloison inclinée est suspendue à un treuil qui permet de modifier la pente de la cloison et de changer ainsi le niveau du déversoir. Dans ce système l'eau qui franchit le déversoir peut tomber en chute verticale libre soit sur les aubes supérieures de la turbine, soit directement sur la paroi déformable avant de s'engager entre les aubes, suivant le réglage de position de ladite cloison adopté. Cependant le système est complexe et il ne permet pas de fournir une régulation progressive et sans à coup de l'alimentation d'eau au contact de la turbine ni d'optimiser son rendement hydraulique dans les divers cas de débit disponibles.

Le brevet US6208037 fournit un autre exemple d'une solution de l'état de la technique, dans laquelle une roue de turbine est précédée par un seuil sans barrage dans un canal. Elle comporte plusieurs modes opératoires. Dans l'un d'eux la turbine est alimentée par sa partie supérieure grâce à un volet mobile en pente montante vers le sommet de la roue. Dans un autre la roue est attaquée par l'eau du canal à la fois par le haut et par sa partie inférieure avec des conduits ou canalisations déplaçables appropriés. Deux formes de mises en oeuvre sont proposées selon que l'on souhaite obtenir une rotation de la roue dans le sens des aiguilles d'une montre ou dans le sens opposé. Un système de treuil permet de choisir entre l'une et l'autre en déplaçant le volet en pente montant pour le déversement de l'eau du canal d'un côté ou de l'autre de la partie supérieure de la roue tandis que l'alimentation de la roue dans sa partie inférieure est réalisée à partir de buses dont la position de sortie en direction des aubes ou godets de roue est réglable. Une telle installation, complexe, n'est pas adaptée à une alimentation des aubes de la turbine permettant d'éviter ou de limiter les chocs de l'eau incidente sur les pales de la turbine pour obtenir une conversion d'énergie hydraulique en énergie mécanique dont le rendement reste satisfaisant à tous les débits.

Le demandeur a constaté en effet que le rendement de la conversion de l'énergie hydraulique, tant potentielle que cinétique, est lui même variable en fonction des conditions de débit. Face aux difficultés rencontrées avec les propositions de l'état de la technique, il serait donc tout à fait souhaitable de proposer des solutions simples pour faire en sorte que le rendement de cette conversion reste toujours à un niveau acceptable, si possible proche de l'optimum, quelles que soient les conditions de débit de l'eau dans le canal d'entraînement de la turbine, à raison par exemple des variations climatiques.

### EXPOSE DE L'INVENTION

La présente invention vise en conséquence à contrôler au moins en partie une veine fluide admise à l'entrée du canal d'entraînement d'une turbine à aubes pour optimiser son fonctionnement, et notamment améliorer son rendement, pour la récupération de l'énergie véhiculée par le courant d'eau.

A cet effet l'invention a notamment pour objet un dispositif d'admission à l'entrée d'une turbine comprenant une roue à aubes propre à être montée dans un couloir aménagé sur un cours d'eau en milieu naturel, ce couloir comportant deux parois entre lesquelles peut tourner la roue de la turbine autour d'un axe et un fond limité par une paroi sous la roue, qui relie une zone haute du côté de l'arrivée de l'eau en amont de la roue à une zone basse vers l'aval, pour former un canal d'écoulement qui comporte une zone motrice, à l'intérieur de laquelle les extrémités radiales externes desdites aubes défilent en rasant la paroi de fond, précédée en amont d'une zone d'admission de l'eau dans la roue et suivie en aval par une zone d'échappement de l'eau hors de la roue. Le dispositif est caractérisé en ce que, dans la zone d'admission, la paroi de fond du canal d'écoulement présente une portion en pente descendante vers l'aval dont l'inclinaison est réglable et qui possède au moins un secteur d'entrée amont, ajustable entre une première position relativement basse et éloignée des aubes de la turbine et une deuxième position plus haute et plus proche de la trajectoire des aubes de la turbine, ce secteur d'entrée déterminant le niveau de l'eau admise dans le canal d'écoulement, un secteur de paroi en pente pour accélérer l'eau admise selon une orientation imposée, et un secteur inférieur en aval vers la fin de la zone d'admission., Un organe de commande est normalement prévu pour effectuer le réglage (50) de ladite portion de paroi en pente en fonction de conditions opératoires souhaitées.

Grâce à la disposition selon l'invention, on obtient ainsi un moyen de réglage simple des conditions d'admission de l'eau de turbinage dans la roue. Ce moyen permet d'atteindre un rendement de fonctionnement hydraulique de la machine proche de l'optimum quelles que soient les conditions notamment de débit du cours d'eau sur lequel est implanté la machine.

L'invention repose notamment sur l'observation qu'en orientant convenablement inclinaison de la paroi de fond à l'entrée de la zone d'admission en fonction du débit admis ou disponible, on peut faire en sorte que les effets de choc dus à l'impact de la veine d'eau entrant dans la roue avec chacune des aubes reste minimum. Ce résultat peut être d'ailleurs amélioré également par le choix d'autres facteurs tels que la forme ou le profil de la portion de paroi de fond mobile ainsi que le choix du profil des aubes. Selon un mode préféré, l'effet de choc minimum est obtenu lorsque le vecteur résultant de la composition des vecteurs de la vitesse des particules d'eau au point où elles entrent en contact avec une aube et de la vitesse circonférentielle de l'aube en ce point est tangent à la surface de l'aube à son extrémité radiale externe.

C'est dans ces conditions que la perte d'énergie résultant des impacts périodiques multiples entre la veine d'eau admise et la roue peut-être réduite à un minimum. En réglant la pente d'entrée de la veine d'eau par l'inclinaison de la portion de paroi de fond, on peut agir sur la vitesse du courant qui pénètre dans la roue de manière telle que la veine d'eau communique au mieux cette énergie cinétique aux aubes qui la transforment en couple de rotation mécanique de la roue autour de l'axe.

Selon un mode de réalisation simple, la portion amont de la paroi de fond du canal d'écoulement comprend un volet orientable, présentant une arête du côté amont ajustable en position pour former l'entrée d'admission de la paroi de fond dudit canal d'écoulement. Ce volet est raccordé du côté aval à une portion de ladite paroi de fond qui se prolonge autour de la partie inférieure de la roue. Il peut peut être articulé à cet endroit autour d'un axe fixe sensiblement parallèle à l'axe de rotation de la roue. L'expérience du demandeur a montré qu'on parvenait ainsi à obtenir une bonne approximation des conditions précédemment énoncées dans des plages de débit courantes. On peut par exemple déterminer expérimentalement, au moins pour certains débits du cours d'eau dans lequel est installée la machine, le réglage du volet qui fournit la plus grande puissance électrique et d'optimiser ainsi le rendement de la machine pour chacun de ces débits.

La partie fixe de la paroi de fond précédemment mentionnée peut se prolonger vers l'amont au-delà de la zone motrice au ras de laquelle défilent les extrémités radiales externes des aubes à la partie inférieure de la roue. L'axe de pivotement du volet peut être lui-même déporté dans la direction de l'amont au-delà de cette zone motrice.

Un autre facteur de réglage des conditions d'admission de l'eau et du fonctionnement de la turbine réside dans la hauteur de la lèvre d'entrée de l'eau dans le canal d'écoulement. Dans le cas d'un volet pivotant simple, le niveau d'entrée de l'eau à l'amont du canal d'écoulement dans la machine dépend de l'inclinaison du volet. On peut prévoir d'adopter un volet de longueur variable qui permet de rendre la hauteur d'entrée de l'eau dans la zone d'admission au moins en partie indépendante de l'inclinaison de son trajet vers les aubes de la roue proprement dite. A cet effet, on peut monter l'axe de pivotement du volet sur une plaque capable de translation, par exemple coulissante, par rapport au volet de façon à obtenir un degré de liberté supplémentaire pour régler l'éloignement de la lèvre d'admission de l'eau sur volet par rapport à l'espace dans lequel voyagent les aubes lors des la rotation de la roue dans cette direction, sans nécessairement changer la hauteur ou inversement sans changer l'inclinaison du volet d'admission.

On peut aussi utiliser un volet comportant deux éléments pivotants, l'un articulé sur une partie fixe de la paroi de fond du canal d'écoulement et l'autre articulé autour d'une arête en amont du premier, qui peuvent être commandés séparément.

Selon une formule de réalisation intéressante, un volet pivotant coudé unique comprend deux pans inclinés l'un par rapport à l'autre pour former un dièdre ouvert par exemple de 135° d'angle environ, dont l'arête est parallèle à l'axe de la roue. Dans la position la plus inclinée du pan aval articulé sur la paroi fixe, le volet est dressé dans une position qui ferme le canal d'admission. Lorsque que l'angle d'inclinaison du pan aval diminue, à partir de cette position, le fluide admis à l'extrémité du volet amont est guidé selon une première inclinaison puis, au-delà de l'arête du dièdre, selon une deuxième inclinaison plus forte. Si on continue d'abaisser l'angle du pan de volet aval, le pan amont atteint une position horizontale où il cesse de jouer un rôle dans l'admission. Si l'inclinaison du pan aval est encore abaissée, le volet travaille dans une condition où le pan amont est entièrement plongé dans l'eau et seul le pan amont agit comme organe de régulation de la hauteur d'admission et de guidage de l'eau à l'entrée du canal d'écoulement.

Selon une forme de réalisation, la face tournée vers le haut du volet d'admission est garnie d'ailerons ou de nervures longitudinales entre l'amont et l'aval pour guider les filets constitutifs de la veine fluide vers leur entrée dans la turbine. En outre les bords latéraux du volet peuvent être pourvus chacun d'une joue longitudinale pour canaliser le fluide circulant sur ce volet vers l'entrée de la turbine. Il est aussi avantageux d'aménager un rebord d'extrémité arrondi convexe de l'amont vers l'aval pour former ladite lèvre d'entrée de l'eau au fond du canal. Par ailleurs, pour étanchéifier et lisser la jonction entre le volet et la partie fixe de la paroi limitant le fond du canal, un joint souple est avantageusement disposé entre le volet et cette partie fixe.

Enfin selon un mode de réalisation, le volet est pourvu d'attaches de réglage du niveau de son extrémité amont, qui comportent au moins un élément de fixation sur le volet et au moins une réglette d'indexation propre à être rendue solidaire d'une paroi latérale du couloir où est installée la turbine et coopérant avec une attache latérale sur le volet pivotant pour régler l'angle d'inclinaison de ce volet. La manoeuvre peut être commandée par un système de bielles mécaniques ou de leviers manuels et naturellement être motorisée.

On a ainsi réalisé un système de réglage de l'orientation des filets d'eau, de leur vitesse et du débit instantané du courant à l'entrée de la machine, en ajustant le niveau et la distance du point d'entrée du courant par rapport à la trajectoire des extrémités radiales externes des aubes de la turbine dans le couloir de la turbine ainsi que la pente suivie par ce courant.

L'invention s'étend aussi à un procédé de pilotage de la veine fluide entrant dans une machine à roue à aubes à partir d'un réservoir alimenté par un courant, pour optimiser le rendement de la roue. Conformément à ce procédé, on déplace une paroi mobile en pente vers l'aval qui définit le fond d'un canal d'écoulement du fluide moteur de telle façon que le seuil de l'entrée de l'eau dans le canal d'écoulement s'abaisse lorsque que l'inclinaison de cette paroi diminue et s'éloigne de la trajectoire des aubes de la roue. On rapproche au contraire la position de ce seuil vers la trajectoire des aubes au fur et à mesure que l'inclinaison de la portion de paroi en pente augmente et que le niveau dudit seuil s'élève par rapport à l'axe de la roue.

L'invention s'étend également à un procédé pour le pilotage d'une machine hydraulique équipée d'un dispositif d'admission dans lequel on règle la hauteur du niveau de l'eau captée à l'entrée du canal d'écoulement de la roue en fonction d'au moins un seuil de débit prédéterminé.

Selon une application, le seuil de débit correspond au maintien d'un débit minimum réservé dans le cours d'eau avant d'admettre un écoulement d'eau dans la machine et on relève le niveau d'entrée d'eau au fur et à mesure que le débit du cours d'eau faiblit en direction de ce débit minimum. Selon une autre application où le seuil de débit correspond à un débit maximum admissible dans la machine, on relève le niveau d'entrée de l'eau admise dans la machine au fur et à mesure que s'accroît le débit disponible dans le cours d'eau au-delà de ce maximum.

Il peut être avantageux de piloter la hauteur du niveau de l'eau captée à l'entrée du canal d'écoulement en combinant les deux modes d'application précédents pour les faibles et les forts débits du cours d'eau. Il peut également être avantageux, à partir du moment où le débit du cours d'eau dépasse le débit minimum réservé de maintenir le débit d'eau admis dans le canal d'écoulement au voisinage du maximum compatible avec le débit maximum qui peut être absorbé par la machine.

D'autres caractéristiques et avantages de l'invention ressortent de la description faite ci-après en référence aux dessins annexés qui montrent, à titre d'exemple non limitatif, une forme de réalisation de l'objet de l'invention.

### BREVE DESCRIPTION DES FIGURES

La figure 1 est une vue schématique en perspective d'une roue à aubes équipée d'un dispositif d'admission selon un premier mode de réalisation de l'invention.

La figure 2 est une vue en coupe par un plan de symétrie vertical de la machine installée de la figure 1.

Les figures 3A à 3 D illustrent une réalisation de la machine avec une autre forme d'exécution du dispositif d'admission dans quatre situations de réglage différentes.

La figure 4 illustre les explications concernant un principe de réglage de la machine en vue d'atteindre un rendement de bonne qualité.

La figure 5 illustre une autre forme de réalisation d'un volet d'admission pour la mise en oeuvre de l'invention.

La figure 6 est une vue d'ensemble en perspective de la réalisation des figures 3A à 3B et de son volet d'admission.

### DESCRIPTION D'UN OU PLUSIEURS EXEMPLES DE REALISATION

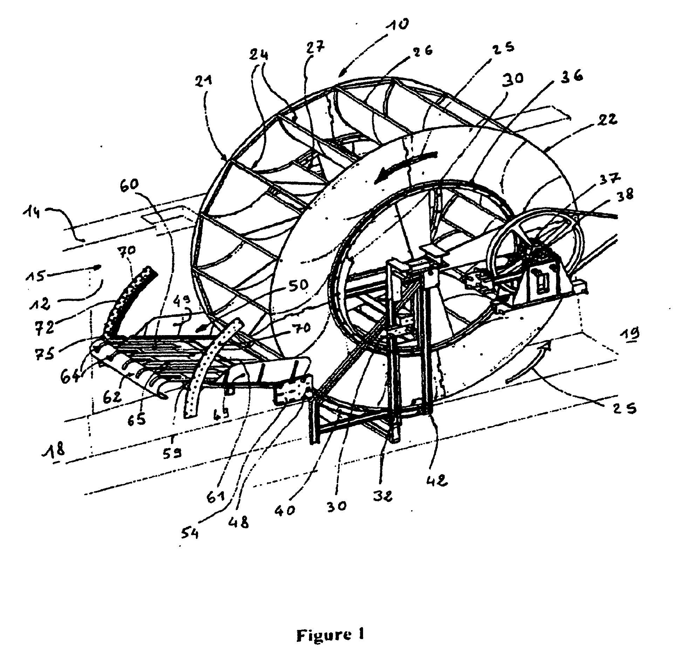

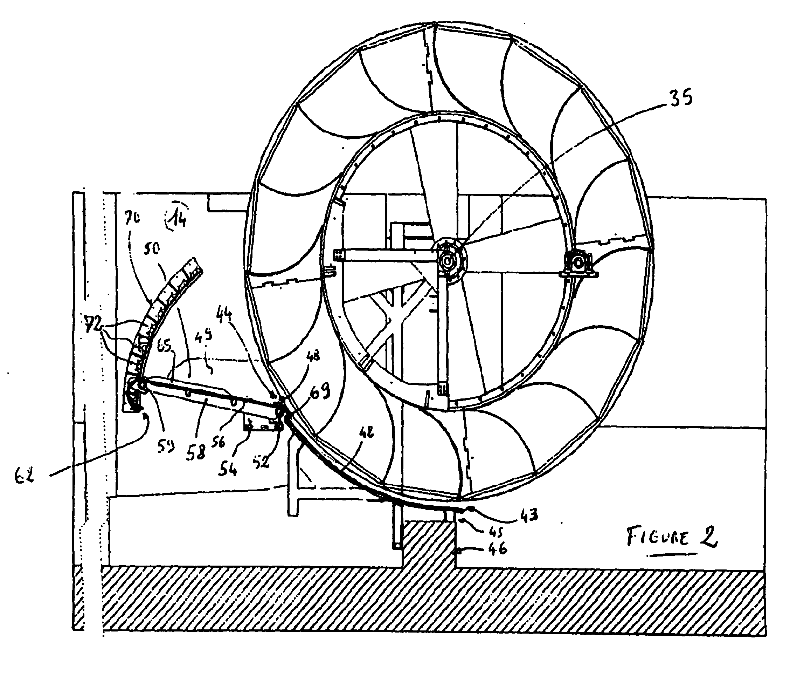

Sur la figure 1, une turbine hydraulique comportant une roue à aubes 10 est installée dans un couloir 15 à parois de béton verticales 12 et 14, aménagées dans un bief sur un cours d'eau naturel non visible sur la figure. La roue 10 est installée de manière à pouvoir turbiner l'écoulement entre l'amont 18 sur la gauche de la figure et l'aval 19 du côté droit de la représentation en tournant autour d'un axe horizontal virtuel 35 (voir figure 2).

La roue comprend deux flasques de tôle 21 et 22 en forme de couronne circulaire entre lesquels sont fixées une pluralité d'aubes 24 possédant, comme représenté, un profil légèrement incurvé dont la concavité est tournée du côté de l'arrivée d'eau lorsqu'elles se présentent vers l'amont 18 du couloir 15, en tournant dans le sens inverse des aiguilles d'une montre, comme figuré par le sens de la flèche 25. On remarque que les intervalles entre les aubes sont ouverts non seulement du côté de leur bordure radiale externe 26 pour recevoir l'eau à turbiner mais également du côté de leur bordure radiale interne 27. Lorsque les aubes 24 parviennent dans le quadrant inférieur gauche de leur trajectoire pour recueillir l'eau admise à l'entrée, leurs bordures radiales internes 27 commencent à défiler le long de la paroi cylindrique convexe d'un bouclier 30 fixe qui empêche l'eau remplissant chaque intervalle entre deux aubes voisines de se propager vers le centre de la roue 10.

Le bouclier 30 comprend une tôle en forme de secteur cylindrique sur une structure métallique fixée à un bâti 32 qui est lui-même monté à poste fixe dans le couloir 15 de la machine. L'obstacle représenté par le bouclier 30 s'étend sur un arc de cercle qui monte du côté amont jusqu'en un point situé entre le niveau supérieur du quadrangle inférieur gauche et le sommet la trajectoire cylindrique des arêtes radiales interne 27 des aubes 24. Vers l'aval, la paroi du bouclier 30 se termine sensiblement à l'aplomb de l'axe de rotation 35 de la roue 10. Le bouclier 30 participe donc à la formation d'une retenue de l'eau en amont du couloir d'admission 15. Le bâti 32 supporte également deux paliers support (non représentés) pour recevoir à rotation les flasques 21 et 22 constitutifs de la roue 10. En outre la face externe du flasque 22 porte un anneau 36 à denture cylindrique qui engrène avec un pignon 37 d'un dispositif multiplicateur de rotation 38 pour entraîner une génératrice non représentée à une vitesse optimale pour la génération de la puissance électrique recherchée.

Le bâti 32 de la machine qui est réalisé ici par un assemblage mécanosoudé de poutrelles métalliques supporte encore un carter inférieur 40 à paroi cylindrique concave 42 fixée sous le passage du demi quadrant inférieur gauche la roue 10 (figure 1) de telle sorte que les extrémités radiales externes 26 des aubes 24 tournent en défilant au ras de cette paroi concave 42. La paroi 42 constitue la partie fixe du fond d'un canal 44 d'écoulement de l'eau turbinée par la roue (figure 2). Cette paroi de fond 42 se termine en 43 sensiblement à l'aplomb de l'axe de roue 35, permettant ainsi à la partie inférieure du canal 44 de déboucher dans une sortie d'eau en béton 45. Cette sortie est limitée en amont par une poutre 46 formée dans la paroi en béton à laquelle est fixée la partie inférieure du bâti 32.

Du côté amont, la paroi 42 du carter intérieur 40 se termine en un point 48 (figure 2) sur un rayon de la trajectoire de la roue 10 à un angle un peu supérieur à 45° par rapport à la verticale. En ce point est articulé un volet 50 monté pivotant autour d'un axe horizontal. En variante, des réalisations sont possibles dans lesquelles cette partie fixe peut se prolonger vers l'amont. L'axe de pivotement du volet 50 se trouver alors lui-même déporté quelque peu par rapport à la trajectoire des aubes de la roue 10 dans la direction amont. Il comprend une première plaque de tôle 56 renforcée par une armature 58 à sa partie inférieure qui présente vers son bord aval deux bouts d'axe 52 articulés dans deux paliers horizontaux fixés chacun dans une plaque verticale respective 54. Chaque plaque 54 est solidaire du bâti 32 et fixée le long d'une des parois latérales verticales, respectivement 12 et 14, du couloir 15. De chaque côté de la plaque 56 est agencée une joue verticale en tôle 49 fixée à l'armature 58 pour canaliser la veine fluide entrant par le volet 50 dans le canal d'entrée de la roue 10. Une bavette 69 en matière souple et imperméable est installée à la liaison entre l'extrémité aval du volet 50 au voisinage de son axe de pivotement et l'extrémité amont 48 de la partie fixe du canal d'écoulement de l'eau dans la turbine vers le bord supérieur du carter inférieur 40.

Le volet 50 comprend une deuxième plaque de tôle 60 recouvrant partiellement la face supérieure de la plaque 56 et capable de coulisser par rapport à elle pour régler la longueur totale du volet 50. La plaque 60 comporte une extrémité aval 61, bien visible sur la figure 1, et une extrémité amont 62 formant une lèvre arrondie débordant par rapport l'extrémité amont 59 de la plaque inférieure 56. Dans cette partie arrondie 62 la plaque 60 présente des nervures arrondies 64 de renfoncement et de guidage longitudinal des filets fluides atteignant le volet 50 à l'entrée du canal d'admission de l'eau dans la roue 10. La face supérieure de la plaque 60 est également garnie de nervures verticales longitudinales 65 pour guider la veine fluide dans la partie amont de ce canal d'admission.

Deux réglettes d'indexation en arc de cercle 70 sont solidarisées chacune avec une paroi verticale respective 12 et 14 du couloir 15, le long de la trajectoire parcourue par l'extrémité amont 59 de la première plaque 56 du volet 50 lorsque ce dernier est pivoté autour de son axe. Chaque réglette 70 comporte une série d'encoches 72 disposées en arc de cercle et débouchant latéralement face à la trajectoire de ladite extrémité 59 de la première plaque 56. A cette extrémité 59, l'armature 58 est équipée d'un système de goupille 75 propre à venir s'enclencher latéralement dans un encoche de la réglette correspondant pour immobiliser l'extrémité 59 de la plaque 56 dans la position de pivotement correspondante du volet 50. En rétractant les goupilles du système 75, on peut libérer à nouveau le mouvement de pivotement du volet 50 pour modifier son inclinaison et la hauteur de son extrémité supérieure à l'entrée de l'eau dans la zone d'admission du canal d'écoulement.

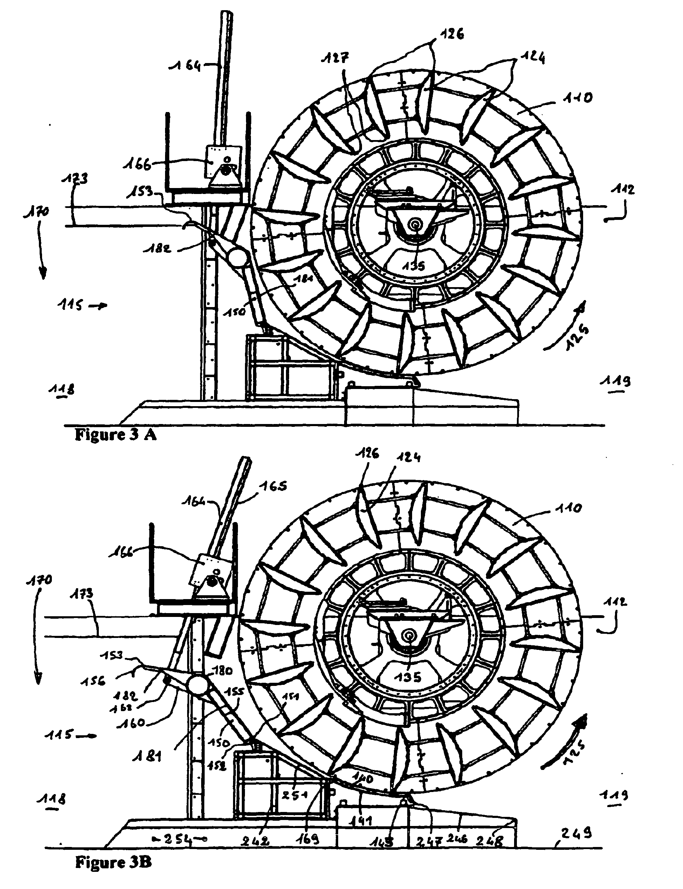

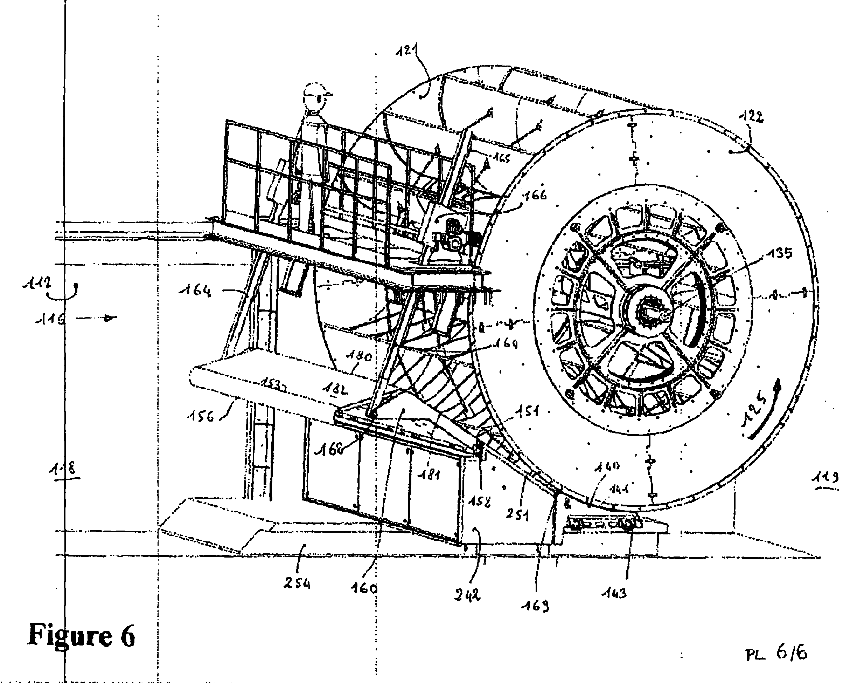

Si on se tourne maintenant vers les figures 3A à 3D, on reconnaît dans chacune une roue de turbine 110 rotative autour d'un axe 135, installée entre l'amont 118 et l'aval 119 d'un couloir 115 à parois verticales 112 ménagé sur un bief dans le cours d'eau. La roue 110 comporte une couronne d'aubes 124 montées entre deux flasques 121 et 122 (figure 6). Les arêtes radiales externes des aubes 124 sont désignées par la référence 126 et les arêtes radiales internes par la référence 127. Comme dans les figures 1 et 2, les aubes de la turbine ont un profil incurvé dont la concavité est tournée du côté de l'arrivée d'eau depuis l'amont 118 du couloir 115 lorsqu'elles entrent dans la partie inférieure de leur trajectoire à la base de la roue. Dans le cas de figure représenté la roue est ainsi entraînée dans le sens inverse des aiguilles d'une montre (flèche 125). Les flasques 121 et 122 sont montés à rotation autour de l'axe 135. Ils entraînent en tournant une génératrice de courant à l'aide d'un système de transmission multiplicateur attaqué soit directement par le mouvement de l'un ou des deux flasques, soit par l'axe 135.

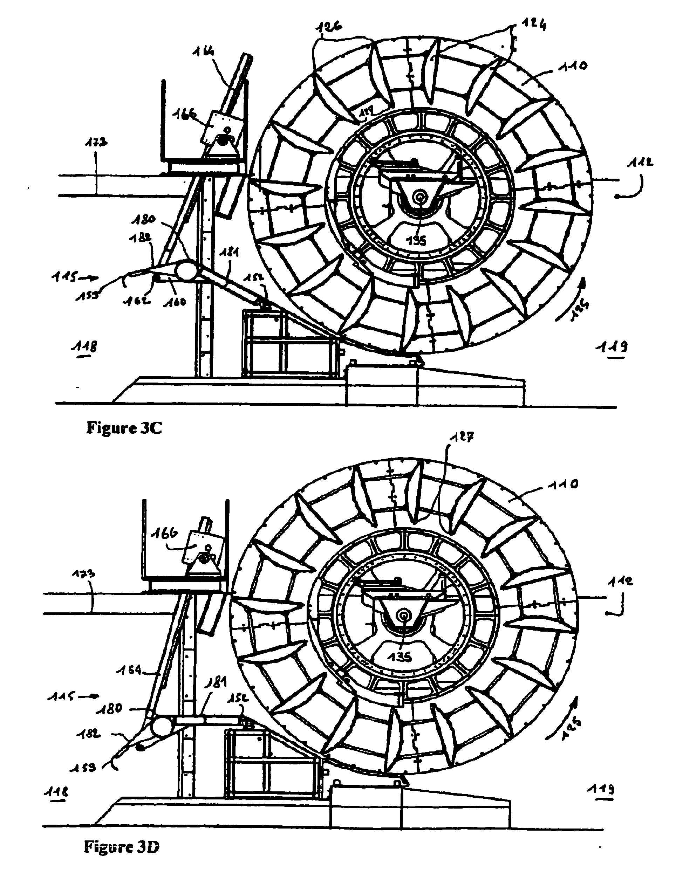

La description détaillée qui suit est faite plus particulièrement en regard des signes de référence indiqués dans les figures 3B et 6, sachant que ces références valent pour la désignation des mêmes éléments dans les figures 3A, 3C et 3D. Un conduit d'écoulement de l'eau dans la roue est limité à sa partie inférieure par une paroi 140 dont un secteur 141 en arc de cercle est disposé dans le quadrant inférieur amont de la roue. Dans cet exemple, ce secteur de paroi 141 se termine vers l'aval par une arête 143 situé sensiblement à l'aplomb de l'axe 135 de la roue et vers l'amont par une arête 169. Entre ces deux arêtes 169 et 143, le défilement des arêtes radiales externes 126 des aubes 124 s'effectue au ras de la surface concave du secteur 140 de façon à essentiellement au moins fermer, du côté radial externe, l'espace entre deux aubes adjacentes pendant le temps de leur passage face à ce secteur de la paroi inférieure 140, sans freiner le mouvement de la roue.

Au niveau de l'arête 143, le profil de la paroi 140 marque un décrochement vers le bas 247 puis se prolonge par un secteur en pente douce jusqu'en un point 248 ou le canal d'écoulement de l'eau dans la roue 110 rejoint le fond 249 du cours d'eau. Vers l'amont de l'arête 169, la paroi 140 se prolonge par un secteur 251 qui remonte vers l'amont en s'écartant progressivement de la trajectoire des arêtes radiales externes 126 de la roue. Les secteurs 141 et 251 sont définis par la surface de plaques de tôles portées par une structure métallique 242 elle-même montée au fond du couloir 115 sur un bâti de maçonnerie 254 qui habille le fond du cours d'eau le long de cet emplacement.

En amont du secteur 251 de la paroi 140 est monté un volet coudé pivotant 150 de contrôle de l'admission du fluide moteur dans la turbine. La face supérieure du volet coudé 150 forme un dièdre comportant de deux pans 181 en aval et 182 en amont, réunis par une arête 180 parallèle à l'axe 135. Les deux pans forment entre eux un angle obtus de 135 ° d'angle. Dans la position représentée à la figure 3B on voit que le pan 181 est assez fortement incliné par rapport à l'horizontale, tandis que l'inclinaison du pan 182 est d'environ 45° inférieure à celle du pan 181. Le pan 181 est articulé à une extrémité inférieure aval 151 autour d'un axe horizontal 152 agencé au niveau de l'arête d'extrémité amont du secteur 251. Du côté opposé par rapport à l'arête 180, le pan 182 se termine à son extrémité supérieure amont 153 par une surface arrondie vers le bas de façon à former une lèvre 156 d'admission de l'eau en provenance de l'amont du canal.

Le volet coudé 150 forme la partie terminale amont de la paroi 140 qui limite le fond d'un canal d'écoulement de l'eau captée dans le couloir 115. Cette eau est admise par-dessus le bord arrondi 156 du volet 150. Si le volet est dans la position des figures 3B ou 3C, elle glisse d'abord le long du pan 182. Puis elle est accélérée le long de la surface en pente descendante réglable 155 du pan 181, avant de rejoindre le secteur fixe 251 à la rencontre des aubes 124. Les surfaces du volet 150 et du secteur fixe 251 délimitent ainsi une zone d'admission en amont du canal d'écoulement de l'eau. Cette eau pénètre ensuite dans l'espace limité par le secteur en arc de cercle 141 de la paroi 140, qui délimite ainsi une zone motrice immédiatement sous la roue pour l'entraîner en rotation. Au-delà de l'arête 143, l'eau ressortant de chaque espace inter aube dans lequel elle est momentanément emprisonnée, s'évacue vers le secteur 246 de la paroi 140. Ce secteur délimite ainsi une zone d'échappement dans le canal d'écoulement de l'eau dans la machine.

Comme le montre bien la vue en perspective de la figure 6, de chaque côté du pan 181 du volet 150 est fixée une joue ou bielle 160 qui se prolonge en partie sur le côté correspondant du pan 182, jusqu'à une extrémité percée d'un oeillet 162. L'oeillet 162 accueille un maneton monté à l'extrémité d'une tige 164 d'un vérin de manoeuvre. La tige 164 relie la bielle 160 à un poste de commande situé sur une rive du couloir 115. Elle est guidée en translation dans une glissière 166 à l'intérieur de laquelle est monté un pignon moteur du vérin qui engrène avec une crémaillère 165 sur la tige 164 (fig. 3B), pour entraîner celle ci de haut en bas. Suivant son degré d'abaissement vers le fond du canal d'écoulement la tige 164 permet de déterminer l'inclinaison du volet 150 qui peut ainsi adopter une gamme de positions, pour contrôler l'admission d'eau à l'intérieur de la roue en fonction d'une logique de pilotage qui tient compte du niveau d'eau dans le couloir et de son débit, notamment.

On a représenté aux figures 3A à 3D quatre positions opératoires du dispositif d'admission ainsi constitué. A la figure 3A, la tige de vérin 164 est presque entièrement sortie de la glissière 166. Le pan 181 du volet 150 est relevé dans une position presque verticale où il est quasiment tangent à la trajectoire des aubes de la roue 110. Le pan 182 est moins incliné par rapport à horizontale, mais son extrémité 153 se trouve cependant à une altitude supérieure au niveau maximum 173 prévu pour le cours d'eau 170 en amont de la roue. Dans cette position l'accès de l'eau du cours d'eau à la zone d'admission du canal d'écoulement est fermé et le système est par conséquent arrêté. Ceci représente une faculté précieuse dans les cas où la machine doit faire face à des conditions exceptionnelles comme par exemple en cas de crue ou de risque d'emballement de la machine par suite d'une panne du générateur entraîné par celle-ci..

Dans le cas de la figure 38, le pan 181 du volet 150 est un peu moins incliné par rapport à l'horizontale que dans le cas de la figure A. L'altitude de l'extrémité du pan amont 182 reste élevée, mais lorsque le cours d'eau atteint un niveau suffisant une veine d'eau peut s'engager le long du pan 182, par-dessus lèvre d'entrée 153 puis dans la pente raide du pan 181, où elle est accélérée fortement, avant d'atteindre la partie fixe de la paroi de fond 140 au niveau de la paroi 251. Dans ce parcours, la veine d'eau rencontre les extrémités radiales externes 126 des aubes en rotation. Suivant un aspect de l'invention, le profil des aubes, la pente et l'altitude de la lèvre d'entrée sont déterminés pour favoriser l'obtention d'un bon rendement de la machine comme il est expliqué ci-après.

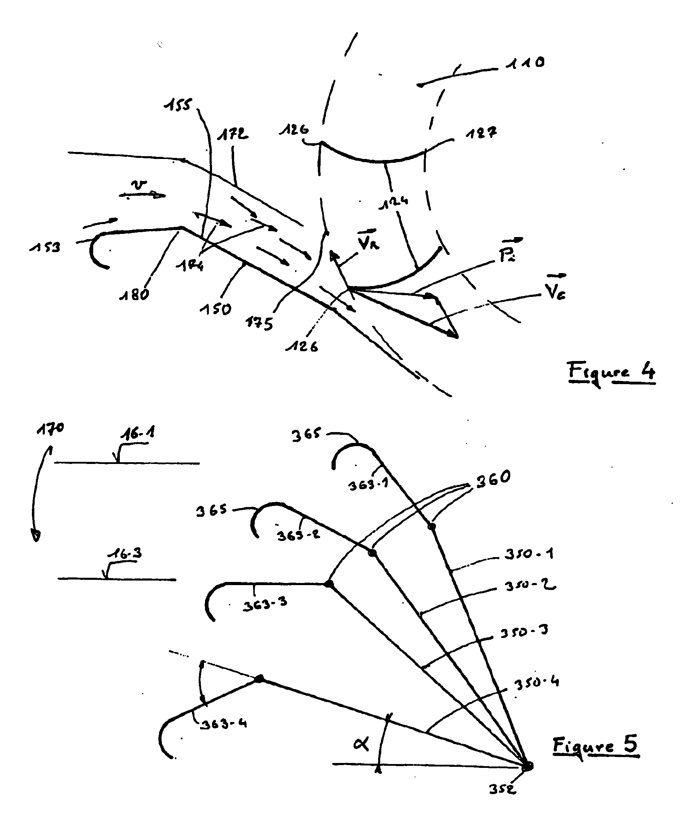

La figure 4 illustre la représentation vectorielle d'une condition d'obtention d'un rendement optimum. Elle représente schématiquement deux aubes 124 entrant dans la zone d'admission du canal d'écoulement de l'eau dans la machine. Une veine d'eau 172 composée de filets d'eau 174, admise par-dessus la lèvre 153 du volet 150, parcourt la face supérieure 155 des deux pans du volet 150 jusqu'à ce qu'elle atteigne la trajectoire 175 des arêtes radiales externes 126 des aubes 124. On a représenté sur l'arête 126, la composition des efforts résultant de l'action directe de l'eau sur l'arête (vecteur V_{E}) et de la vitesse circonférentielle du bord de l'aube (vecteur V_{R}). La perte d'énergie résultant de cette interaction initiale entre l'eau et l'aube est minimale lorsque la composante des efforts (vecteur Pᵢ) sur l'arête est tangente au profil de l'aube à cet endroit comme représenté sur la figure 4.

On comprend que, dans chaque installation particulière, type de cours d'eau, importance de l'installation, caractéristiques de la génératrice électrique entraînée par la machine, etc., on puisse déterminer expérimentalement, ou par simulation à l'aide d'outils logiciels disponibles sur le marché, les conditions de réglage qui permettent d'obtenir des valeurs de rendement satisfaisantes dans les différentes positions opératoires les plus courantes de l'organe de réglage de l'admission d'eau dans la machine.

La figure 3C montre un cas où la pente du pan 181 du volet de réglage 150 est encore diminuée par rapport au cas précédent. Le pan 182 a alors atteint une position où sa pente est négative, c'est-à-dire que le niveau de la lèvre d'entrée 153 est inférieur à celui de l'arête 180. L'arête 180 forme maintenant le seuil de captation de l'eau du cours d'eau admise dans le canal d'écoulement. Si le niveau du cours d'eau est supérieur à celui de l'arête 180, le pan 182 du volet 150 est entièrement immergé. Il ne joue plus aucun rôle fonctionnel dans cette situation. On constate que la zone d'admission d'eau dans le canal d'écoulement est largement ouverte, ce qui peut permettre l'admission d'un débit d'eau important à la machine. Sur la figure 3D le volet 150 est en position d'ouverture maximum. Le pan 181 a une inclinaison nulle et le pan 182 est inopératoire. En pratique on préfère maintenir une pente minimal pour le pan 181 même à l'ouverture maximale de l'admission aux forts débits afin d'accélérer la veine d'eau avant son arrivée entre les aubes.

On avait constaté dans des essais de machines antérieures que des systèmes de déversoir à seuil dans lesquels le débit d'entrée est réglé par le seul ajustement de la hauteur de seuil ne permettait pas d'obtenir un bon rendement dans les cas de forts débits. Les demandeurs ont constaté que cet inconvénient pouvait être très largement surmonté avec la disposition des figures 1 et 3 dans laquelle le réglage du volet d'entrée permet, en cas de fort débit, non seulement d'abaisser le niveau du point d'entrée de l'eau au contact du volet mais aussi d'éloigner celui-ci de la trajectoire 175 des aubes de la roue en ouvrant ainsi plus largement vers l'amont la zone d'admission définie précédemment. La disposition d'un volet à deux pans illustrée aux figures 3A à 3D présente l'avantage lorsque le niveau du cours d'eau remonte au-delà d'un seuil proche de la position de la figure 3C d'augmenter le contrôle de l'orientation et de l'accélération de la veine de liquide pénétrant dans le canal d'écoulement vers la roue jusqu'à pouvoir même l'interrompre dans le cas de la figure 3A.

Concernant le fonctionnement du dispositif, il est intéressant selon un aspect de l'invention d'ajuster le niveau de captation du courant en fonction du débit afin de respecter une ou plusieurs consignes. Ainsi, lorsque la réglementation par exemple impose à l'opérateur de laisser en permanence un débit minimum libre dans le cours d'eau (débit réservé), on limite le débit d'entrée le cas échéant pour respecter cette contrainte en élevant en conséquence le niveau de captation du courant d'eau (lèvre d'entrée 153 ou arête 180 dans le cas des figures 3A à 3D). Si le débit du cours d'eau (mesuré par une sonde installée en permanence sur le site) tend à se rapprocher vers le bas du débit réservé, on relève donc l'inclinaison du volet pour diminuer le débit entrant dans la machine. Si le débit dans le cours d'eau continue à baisser, au risque passer en dessous de la valeur du débit réservé, on peut même interrompre le fonctionnement de la roue en relevant au maximum le volet 150.

Lorsque le débit disponible dans le cours d'eau est élevé, on a intérêt à ouvrir le plus possible le dispositif d'admission de la machine en abaissant l'inclinaison du pan 181 pour turbiner un débit maximum si la demande d'énergie électrique le justifie. Si dans ce cas le débit disponible du cours d'eau en vient à dépasse la valeur maximale admissible par la machine, le système de pilotage commande un relèvement du niveau de captation de l'eau par le volet 150 de façon à ramener le débit entrant dans la machine à des valeurs compatibles avec sa capacité.

La figure 5 illustre schématiquement une autre réalisation d'un dispositif d'admission dans quatre cas de réglage différents. Un volet 350 (affecté d'un indice différent de 1 à 4 pour chacun de ces cas) est monté pivotant autour d'un axe horizontal 352 à l'extrémité amont d'un secteur fixe tel que 251 (fig. 1 ou 3), pour réaliser un secteur à pente descendante variable vers l'aval de la zone d'admission dans une paroi d'admission telle que 140 aux figures 1 et 3B. A l'extrémité amont 360 de ce volet 350 est articulé un autre volet 363 pivotant autour d'un axe horizontal, terminé par une lèvre d'entrée arrondie 365 à son autre extrémité. Dans le cas du volet 350-1, réglé pour un niveau d'eau 16-1 maximum dans le réservoir 170, la pente du volet 350 est maximale et le volet 365-1 est presque dans son prolongement. Dans le cas des volets 350-2 et 350-3, l'inclinaison va en diminuant et celle des volets d'extrémité respectifs 363-2 et 363-3 encore davantage, de sorte que ces volets d'extrémité font un angle de plus en plus grand avec le volet 350 correspondant. Sur le schéma on voit en 16-3 par exemple le niveau de l'eau dans le réservoir. La face supérieure du volet 363-3 est pratiquement horizontale, en affleurement avec le niveau de l'eau 16-3. Le volet correspondant 350-3 reste encore fortement incliné sur l'horizontale et fait un angle de 45° environ avec la face supérieure du volet 363-3. Enfin, pour un débit encore plus élevé que dans le cas du volet 363-3, le volet 350-4 est dans une position proche d'une inclinaison minimale a et le volet d'extrémité 363-4 est immergé sous l'eau en position inactive.

On a ainsi réalisé un dispositif permettant, en fonction des variations des conditions de débit du cours d'eau où est installée la roue, de régler au mieux son remplissage et d'optimiser la production d'énergie par deux configurations différentes de l'admission.

Par ailleurs en éloignant de la roue et en abaissant le point d'admission de l'eau dans le canal d'écoulement quand le débit augmente on peut régler la forme prise naturellement par la veine d'eau avec un minimum de pertes dues aux effets de choc et ainsi d'utiliser au mieux l'énergie des filets d'eau qui pénètrent dans l'intervalle entre les aubes pour l'amélioration du rendement.

Les essais du demandeur ont notamment montré qu'on pouvait utiliser avantageusement ce réglage pour obtenir un contrôle efficace des performances de conversion énergétique de l'installation en fonction des diverses conditions de débit disponible.

L'invention n'est pas limitée aux exemples décrits et représentés et diverses modifications peuvent y être apportées sans sortir de son cadre défini par les revendications annexées.

## Revendications

1. Dispositif d'admission à l'entrée d'une turbine comprenant une roue à aubes (10) propre à être montée dans un couloir (15) aménagé sur un cours d'eau en milieu naturel, ce couloir comportant deux parois verticales (12, 14), entre lesquelles peut tourner la roue de la turbine autour d'un axe horizontal, et un fond limité par une paroi dont une partie (42) au moins comprend un profil arqué passant sous la roue, ladite paroi reliant une zone haute du côté de l'arrivée de l'eau en amont dans la turbine et une zone basse pour la sortie de l'eau turbinée par la roue vers l'aval, en formant ainsi un canal d'écoulement (44) qui comporte une zone motrice à l'intérieur de laquelle les extrémités radiales externes (24) des aubes entraînées par l'eau peuvent défiler en rasant la paroi de fond, précédée en amont d'une zone d'admission de l'eau dans la roue et suivie en aval par une zone d'échappement, le dispositif étant **caractérisé en ce que**, dans la zone d'admission, la paroi de fond du canal d'écoulement présente une portion en pente descendante vers l'aval, dont l'inclinaison est réglable, et qui comporte au moins un secteur d'entrée amont ajustable entre une première position relativement basse et éloignée des aubes de la turbine et une deuxième position plus haute et plus proche de la trajectoire desdites aubes, ce secteur d'entrée déterminant le niveau de l'eau admise dans le canal d'écoulement, un secteur de paroi en pente pour accélérer l'eau admise selon une orientation imposée, et un secteur inférieur aval vers la fin de la zone d'admission, et **en ce que** le dispositif comprend en outre un organe de réglage (50) de ladite portion de paroi en pente en fonction de conditions opératoires souhaitées.

2. Dispositif selon la revendication 1, **caractérisé en ce que** le profil et la pente de ladite portion de paroi réglable (150) sont déterminés de telle manière qu'il existe dans plusieurs conditions de débit d'eau un réglage tel que les efforts (Pᵢ) résultant de l'admission de la veine d'eau dans la roue à l'extrémité radiale externe (126) de chaque aube soient sensiblement tangents au profil du bord de cette aube à cette extrémité.

3. Dispositif selon la revendication 1 ou 2, **caractérisé en ce que** ladite portion de paroi réglable comprend un volet orientable (50), comportant, côté amont, une lèvre d'admission (62) ajustable en hauteur à l'entrée dudit canal, et formant une continuité d'écoulement aval dans ladite paroi de fond.

4. Dispositif selon la revendication 3, **caractérisé en ce que** ledit volet (50) est monté pivotant autour d'un axe (52) sensiblement horizontal par rapport à ladite paroi de fond.

5. Dispositif selon la revendication 3 ou 4, **caractérisé en ce que** ledit volet est extensible par déplacement de ladite lèvre d'admission (62) en direction de l'amont.

6. Dispositif selon la revendication 3, **caractérisé en ce que** ledit volet comprend un élément aval (350) articulé par rapport à une portion aval de la paroi de fond (140) et un élément amont (363) portant la dite lèvre d'admission (365) et articulé par rapport à l'élément aval (350).

7. Dispositif selon l'une des revendications 3 ou 4, **caractérisé en ce que** ledit volet (150) comprend un pan amont (182) et un pan aval (181) réunis selon une arête (180) pour former un dièdre d'angle fixe, et l'angle du pan amont (182) avec la verticale est supérieur à celui du pan aval (181) dans la plage de fonctionnement du volet (fig. 3A à 3D).

8. Dispositif selon l'une des revendications 3 à 7, **caractérisé par** un joint souple (69) disposé propre à étanchéifier et lisser la liaison entre le volet et la portion aval de la paroi de fond à laquelle il est raccordé.

9. Dispositif selon l'une des revendications précédentes, **caractérisé en ce que**, dans une position opérationnelle où la pente de ladite portion de paroi réglable par rapport au plan horizontal est maximale, ladite portion de paroi réglable (150) ferme l'admission de l'eau du courant dans la roue de façon sensiblement complète.

10. Machine hydraulique comprenant une roue à aubes (10) propre à être montée dans un couloir (15) aménagé sur un cours d'eau en milieu naturel, ce couloir comportant deux parois verticales (12, 14) entre lesquelles peut tourner la roue de la turbine autour d'un axe horizontal et un fond limité par une paroi dont une partie (42) au moins comprend un profil arqué autour de la roue, ladite paroi reliant une zone haute en amont du côté de l'arrivée de l'eau dans la turbine à une zone basse pour la sortie de l'eau turbinée par la roue vers l'aval, en formant ainsi un canal d'écoulement (44) qui comporte une zone motrice à l'intérieur de laquelle les extrémités radiales externes (24) desdites aubes défilent en rasant la paroi de fond, précédée à l'amont d'une zone d'admission de l'eau dans la turbine et suivie à l'aval par une zone d'échappement où l'eau emprisonnée entre les aubes dans la zone motrice peut s'échapper pour rejoindre le cours d'eau en aval, **caractérisée en ce que** dans la zone d'admission de la machine le canal d'écoulement est limité par une paroi de fond (140) qui comporte une portion (150) réglable conformément à l'une des revendications précédentes.

11. Procédé pour le pilotage d'une machine hydraulique équipée d'un dispositif d'admission conforme à l'une des revendications 1 à 9, **caractérisée en ce qu'**on règle la hauteur du niveau d'admission de l'eau à l'entrée du canal d'écoulement de la roue en fonction d'au moins un seuil de débit prédéterminé dans le cours d'eau.

12. Procédé pour le pilotage d'une machine hydraulique selon la revendication 11, **caractérisé en ce que** ledit seuil de débit correspond au maintien d'un débit réservé minimum dans le cours d'eau avant d'admettre un écoulement d'eau dans la machine, et qu'on relève le niveau d'entrée de l'eau dans la zone d'admission au fur et à mesure que le débit du cours d'eau faiblit en direction de ce débit minimum.

13. Procédé pour le pilotage d'une machine hydraulique selon la revendication 11, **caractérisé en ce que** ledit seuil de débit correspond à un débit maximum admissible dans la machine, et qu'on relève le niveau d'admission de l'eau à l'entrée de la zone d'admission au fur et à mesure que s'accroît le débit disponible dans le cours d'eau au-delà de ce maximum.

14. Procédé pour le pilotage d'une machine hydraulique, **caractérisé en ce qu'**on pilote la hauteur du niveau minimum de captation de l'eau à l'entrée du canal d'écoulement selon le mode de pilotage de la revendication 12 aux faibles débits du cours d'eau et selon le mode de pilotage de la revendication 13 aux forts débits.

15. Procédé pour le pilotage d'une machine hydraulique selon l'une des revendications 11 à 14, **caractérisé en ce qu'**à partir du moment où le débit du cours d'eau dépasse le débit minimum réservé, on maintient le débit d'eau admis dans le canal d'écoulement au voisinage du maximum admissible par la machine.

## Patentansprüche

1. Einlassvorrichtung am Eingang einer Turbine, die ein Schaufelrad (10) enthält, das geeignet ist, um in eine in einem Wasserlauf in natürlicher Umgebung angelegte Rinne (15) montiert zu werden, wobei diese Rinne zwei senkrechte Wände (12, 14), zwischen denen das Rad der Turbine um eine waagrechte Achse drehen kann, und einen Boden aufweist, der von einer Wand begrenzt wird, von der mindestens ein Teil (42) ein gebogenes Profil enthält, das unter dem Rad durchgeht, wobei die Wand eine obere Zone auf der Seite des Wasserzulaufs stromaufwärts in der Turbine und eine untere Zone für den Austritt des durch die Turbine geflossenen Wassers nach stromabwärts verbindet, indem so ein Strömungskanal (44) geformt wird, der eine Antriebszone aufweist, in deren Innerem die radial äußeren Enden (24) der vom Wasser angetriebenen Schaufeln vorbeilaufen können, indem sie die Bodenwand streifen, vor der stromaufwärts eine Einlasszone des Wassers in das Rad liegt, und auf die stromabwärts eine Auslasszone folgt, wobei die Vorrichtung **dadurch gekennzeichnet ist, dass** in der Einlasszone die Bodenwand des Strömungskanals einen Abschnitt mit Abwärtsgefälle nach stromabwärts hat, dessen Neigung einstellbar ist, und der mindestens einen stromaufwärts liegenden Eingangssektor, der zwischen einer ersten relativ tiefen und von den Schaufeln der Turbine entfernten Stellung und einer zweiten Stellung einstellbar ist, die höher und näher an der Strecke der Schaufeln ist, wobei dieser Eingangssektor den Pegel des in den Strömungskanal eingelassenen Wassers bestimmt, einen Wandsektor mit Gefälle, um das eingelassene Wasser gemäß einer vorgegebenen Ausrichtung zu beschleunigen, und einen unteren stromabwärts liegenden Sektor zum Ende der Einlasszone aufweist, und dass die Vorrichtung außerdem ein Regelorgan (50) des Wandabschnitts mit Gefälle abhängig von gewünschten Betriebsbedingungen enthält.

2. Vorrichtung nach Anspruch 1, **dadurch gekennzeichnet, dass** das Profil und das Gefälle des regelbaren Wandabschnitts (150) so festgelegt werden, dass es unter mehreren Wasserdurchsatzbedingungen eine solche Regelung gibt, dass die aus dem Einlass der Wasserader in das Rad am radial äußeren Ende (126) jeder Schaufel resultierenden Kräfte (Pᵢ) im Wesentlichen das Profil des Rands dieser Schaufel an diesem Ende tangieren.

3. Vorrichtung nach Anspruch 1 oder 2, **dadurch gekennzeichnet, dass** der regelbare Wandabschnitt eine ausrichtbare Klappe (50) enthält, die stromaufwärts eine höhenverstellbare Einlasslippe (62) am Eingang des Kanals aufweist und eine Strömungskontinuität stromabwärts in der Bodenwand formt.

4. Vorrichtung nach Anspruch 3, **dadurch gekennzeichnet, dass** die Klappe (50) um eine im Wesentlichen waagrechte Achse (52) bezüglich der Bodenwand schwenkbar ist.

5. Vorrichtung nach Anspruch 3 oder 4, **dadurch gekennzeichnet, dass** die Klappe durch Verschiebung der Einlasslippe (62) nach stromaufwärts ausdehnbar ist.

6. Vorrichtung nach Anspruch 3, **dadurch gekennzeichnet, dass** die Klappe ein stromabwärts liegendes Element (350), das bezüglich eines stromabwärts liegenden Abschnitts der Bodenwand (140) angelenkt ist, und ein stromaufwärts liegendes Element (363) enthält, das die Einlasslippe (365) trägt und bezüglich des stromabwärts liegenden Elements (350) angelenkt ist.

7. Vorrichtung nach einem der Ansprüche 3 oder 4, **dadurch gekennzeichnet, dass** die Klappe (150) eine stromaufwärts liegende Seitenfläche (182) und eine stromabwärts liegende Seitenfläche (181) enthält, die gemäß einer Kante (180) vereint sind, um einen Dieder mit festliegendem Winkel zu formen, und der Winkel der stromaufwärts liegenden Seitenfläche (182) mit der Senkrechten größer ist als derjenige der stromabwärts liegenden Seitenfläche (181) im Betriebsbereich der Klappe (Fig. 3A bis 3D).

8. Vorrichtung nach einem der Ansprüche 3 bis 7, **gekennzeichnet durch** eine elastische Dichtung (69), die so angeordnet ist, dass sie geeignet ist, die Verbindung zwischen der Klappe und dem stromabwärts liegenden Abschnitt der Bodenwand, mit dem sie verbunden ist, abzudichten und zu glätten.

9. Vorrichtung nach einem der vorhergehenden Ansprüche, **dadurch gekennzeichnet, dass** in einer Betriebsstellung, in der das Gefälle des regelbaren Wandabschnitts bezüglich der waagrechten Ebene maximal ist, der regelbare Wandabschnitt (150) den Einlass des Wassers des Stroms in das Rad im Wesentlichen vollständig schließt.

10. Hydraulische Maschine, die ein Schaufelrad (10) enthält, das geeignet ist, um in eine in einem Wasserlauf in natürlicher Umgebung angelegte Rinne (15) montiert zu werden, wobei diese Rinne zwei senkrechte Wände (12, 14), zwischen denen das Rad der Turbine um eine waagrechte Achse drehen kann, und einen Boden aufweist, der von einer Wand begrenzt wird, von der mindestens ein Teil (42) ein um das Rad gebogenes Profil enthält, wobei die Wand eine obere Zone stromaufwärts auf der Seite des Wasserzulaufs in die Turbine mit einer unteren Zone für den Austritt des durch die Turbine geflossenen Wassers nach stromabwärts verbindet, indem so ein Strömungskanal (44) geformt wird, der eine Antriebszone aufweist, in deren Innerem die radial äußeren Enden (24) der Schaufeln vorbeilaufen, indem sie die Bodenwand streifen, vor der stromaufwärts eine Einlasszone des Wassers in die Turbine liegt und auf die stromabwärts eine Auslasszone folgt, in der das zwischen den Schaufeln in der Antriebszone eingeschlossene Wasser austreten kann, um sich mit dem Wasserlauf stromabwärts zu verbinden, **dadurch gekennzeichnet, dass** in der Einlasszone der Maschine der Strömungskanal durch eine Bodenwand (140) begrenzt wird, die einen einstellbaren Teil (150) nach einem der vorhergehenden Ansprüche aufweist.

11. Verfahren zur Steuerung einer hydraulischen Maschine, die mit einer Einlassvorrichtung nach einem der Ansprüche 1 bis 9 ausgestattet ist, **dadurch gekennzeichnet, dass** die Höhe des Einlasspegels des Wassers am Eingang des Strömungskanals des Rads abhängig von mindestens einer vorbestimmten Durchsatzschwelle im Wasserlauf bestimmt wird.

12. Verfahren zur Steuerung einer hydraulischen Maschine nach Anspruch 11, **dadurch gekennzeichnet, dass** die Durchsatzschwelle der Aufrechterhaltung eines Mindestdurchsatzes im Wasserlauf entspricht, ehe eine Wasserströmung in die Maschine eingelassen wird, und dass der Eingangspegel des Wassers in der Einlasszone nach und nach erfasst wird, während der Wasserdurchsatz in Richtung dieses Mindestdurchsatzes abnimmt.

13. Verfahren zur Steuerung einer hydraulischen Maschine nach Anspruch 11, **dadurch gekennzeichnet, dass** die Durchsatzschwelle einem maximal in der Maschine zulässigen Pegel entspricht, und dass der Einlasspegel des Wassers am Eingang der Einlasszone nach und nach erfasst wird, während der verfügbare Durchsatz im Wasserlauf über dieses Maximum zunimmt.

14. Verfahren zur Steuerung einer hydraulischen Maschine, **dadurch gekennzeichnet, dass** die Höhe des Mindestpegels der Erfassung des Wassers am Eingang des Strömungskanals gemäß der Steuerart des Anspruchs 12 bei den geringen Durchsätzen des Wasserlaufs und gemäß der Steuerart des Anspruchs 13 bei starken Durchsätzen gesteuert wird.

15. Verfahren zur Steuerung einer hydraulischen Maschine nach einem der Ansprüche 11 bis 14, **dadurch gekennzeichnet, dass** ab dem Moment, in dem der Durchsatz des Wasserlaufs den vorgemerkten Mindestdurchsatz überschreitet, der in den Strömungskanal eingelassene Wasserdurchsatz in der Nähe des maximal von der Maschine zulässigen Maximums gehalten wird.

## Claims

1. An intake device at the inlet of a turbine comprising a water wheel (10) designed to be mounted in a corridor (15) provided in a watercourse in a natural environment, this corridor having two vertical walls (12, 14), between which the wheel of the turbine can rotate about a horizontal axis, and a bottom delimited by a wall of which at least a part (42) comprises an arched profile passing under the wheel, said wall connecting an upper region on the side at which water arrives upstream in the turbine and a lower region via which the water agitated by the wheel leaves downstream, thus forming a race (44) which includes a motive region within which the external radial ends (24) of the vanes driven by the water can pass, grazing the bottom wall, preceded upstream by a region for intake of water into the wheel and followed downstream by an exhaust region, the device being **characterized in that**, in the intake region, the bottom wall of the race has a portion with a downstream-oriented downward slope, the inclination of which can be adjusted, and which includes at least one upstream inlet sector that can be adjusted between a first relatively low position away from the vanes of the turbine and a second position, higher and closer to the trajectory of said vanes, this inlet sector determining the level of the water taken into the race, a sloping wall sector to accelerate the water taken in an imposed direction, and a downstream lower sector toward the end of the intake region, and **in that** the device also comprises a member (50) for adjusting said sloping wall portion according to desired operating conditions.

2. The device as claimed in claim 1, **characterized in that** the profile and the slope of said adjustable wall portion (150) are determined such that, in a number of water flow rate conditions, there is an adjustment such that the forces (Pᵢ) resulting from the intake of the stream of water into the wheel at the external radial edge (126) of each vane are substantially tangential to the profile of the edge of this vane at this end.

3. The device as claimed in claim 1 or 2, **characterized in that** said adjustable wall portion includes a flap (50) that can be oriented, comprising, on the upstream side, an intake lip (62) that can be adjusted height-wise at the inlet of said channel, and forming a downstream flow continuity in said bottom wall.

4. The device as claimed in claim 3, **characterized in that** said flap (50) is mounted to pivot about an axis (52) substantially horizontal with respect to said bottom wall.

5. The device as claimed in claim 3 or 4, **characterized in that** said flap can be extended by displacing said intake lip (62) in the upstream direction.

6. The device as claimed in claim 3, **characterized in that** said flap comprises a downstream element (350) articulated relative to a downstream portion of the bottom wall (140) and an upstream element (363) bearing said intake lip (365) and articulated relative to the downstream element (350).

7. The device as claimed in either of claims 3 and 4, **characterized in that** said flap (150) comprises an upstream section (182) and a downstream section (181) that meet on an edge (180) to form a fixed angle dihedron, and the angle of the upstream section (182) relative to the vertical is greater than that of the downstream section (181) within the range of operation of the flap (fig. 3A to 3D).

8. The device as claimed in one of claims 3 to 7, **characterized by** a flexible seal (69) arranged to seal and smooth the connection between the flap and the downstream portion of the bottom wall to which it is connected.

9. The device as claimed in one of the preceding claims, **characterized in that**, in an operational position in which the slope of said portion of wall that can be adjusted relative to the horizontal plane is maximum, said adjustable wall portion (150) shuts off the intake of water from the current in the wheel in a substantially complete manner.

10. A hydraulic machine comprising a water wheel (10) is able to be mounted in a corridor (15) provided in a watercourse in a natural environment, this corridor having two vertical walls (12, 14) between which the wheel of the turbine can rotate about a horizontal axis and a bottom delimited by a wall of which at least a part (42) comprises an arched profile about the wheel, said wall connecting an upper region upstream of the side via which the water enters into the turbine to a lower region via which the water agitated by the wheel leaves downstream, thus forming a race (44) which comprises a motive region within which the external radial ends (24) of said vanes pass, grazing the bottom wall, preceded upstream by a region for the intake of water into the turbine and followed downstream by an exhaust region in which the water captured between the vanes in the motive region can escape to rejoin the watercourse downstream, **characterized in that**, in the intake region of the machine, the race is delimited by a bottom wall (140) which comprises an adjustable portion (150) according to one of the preceding claims.

11. A method for controlling a hydraulic machine equipped with an intake device as claimed in one of claims 1 to 9, **characterized in that** the height of the water intake level is adjusted at the inlet of the wheel race as a function of at least one predetermined flow rate threshold in the watercourse.

12. The method for controlling a hydraulic machine as claimed in claim 11, **characterized in that** said flow rate threshold corresponds to maintaining a minimum reserved flow rate in the watercourse before admitting a flow of water into the machine, and that the inlet level of the water in the intake region is raised as the flow rate of the watercourse decreases toward this minimum flow rate.

13. The method for controlling a hydraulic machine as claimed in claim 11, **characterized in that** said flow rate threshold corresponds to a maximum flow rate allowed in the machine, and that the water intake level at the inlet of the intake region is raised as the flow rate available in the watercourse increases beyond this maximum.

14. A method for controlling a hydraulic machine, **characterized in that** the height of the minimum water pick-up level at the inlet of the race is controlled according to the control mode of claim 12 at the low watercourse flow rates and according to the control mode of claim 13 at the high flow rates.

15. The method for controlling a hydraulic machine as claimed in one of claims 11 to 14, **characterized in that**, from the moment when the flow rate of the watercourse exceeds the reserved minimum flow rate, the water flow rate admitted into the race is maintained close to the maximum that can be allowed by the machine.
